# FASCICULE DE BREVET EUROPEEN

(11) **EP 1 084 868 B1**
(45) Date de publication et mention de la délivrance du brevet: **26.02.2003**
(21) Numéro de dépôt: 00119708.6
(22) Date de dépôt: 09.09.2000
(51) Int. Cl.: B60B 21/06, B60B 1/04

(54) **Jante de bicyclette et roue comprenant une telle jante**
Fahrradfelge und Rad mit solcher Felge
Bicycle rim and wheel with such a rim

(30) Priorité: 17.09.1999 FR 9911808
(43) Date de publication de la demande: 21.03.2001
(73) Titulaire: MAVIC S.A., 01990 Saint-Trivier sur Moignans (FR)
(72) Inventeur: Mercat, Jean-Pierre, 01400 Chatillon Sur Chalaronne (FR)
(74) Mandataire: Altenburg, Udo, Dipl.-Phys.

(56) Documents cités:
- EP-A- 0 714 792
- EP-A- 0 715 001
- EP-A- 0 818 328
- WO-A-93/09963

## Description

L'invention concerne une jante de bicyclette et une roue comprenant une telle jante.

De façon connue, une roue comprend un moyeu central, une jante périphérique et des rayons de liaison entre la jante et le moyeu. Les rayons sont répartis selon deux nappes, et dans chacune des nappes leur nombre peut varier de 6 à 18 voire plus selon le degré de rigidité souhaité pour la roue.

La jante est réalisée à partir d'un profilé cintré, qui présente en section une forme de caisson, avec un pont supérieur, un pont inférieur et deux parois latérales de liaison. Il arrive pour certains profils que le pont inférieur soit très étroit et se confonde avec les parois latérales. Pour certaines jantes également, les deux ponts sont réunis par une ou plusieurs nervures intermédiaires.

En ce qui concerne l'accrochage des rayons à la jante, il existe deux modes principaux de construction. Ou bien le moyen de retenue du rayon prend appui sur le pont supérieur de la jante. Dans ce cas, ils s'agit généralement d'oeillets doubles qui retiennent la tête de rayon et qui prennent appui à la fois sur le pont supérieur et sur le pont inférieur de la jante. Ou bien le rayon est accroché uniquement dans la partie inférieure du caisson, c'est à dire le plus souvent au pont inférieur avec un oeillet simple ou même sans oeillet. Pour certaines jantes ayant un profil effilé, il se peut que les rayons soient accrochés aux parois latérales de la jante.

Il peut être intéressant d'accrocher les rayons uniquement dans la partie inférieure du caisson notamment dans le but de réaliser une roue sans chambre à air. Dans ce but, on peut réaliser par exemple dans le pont inférieur des perçages borgnes qui ne traversent pas le pont supérieur. Une telle jante est connue d'après la demande WO 93/09 963, ou bien la demande de brevet EP 818 328, plus particulièrement le mode de réalisation de la figure 13. Les rayons sont dans les deux cas vissés au moyen d'un embout dans des perçages taraudés du pont inférieur de la jante. Le pont supérieur n'ayant aucun perçage sauf celui pour la valve, une telle jante est parfaitement adaptée pour une roue sans chambre à air.

L'invention se rapporte plus particulièrement à cette catégorie de jante.

Les propriétés importantes d'une jante sont sa résistance statique, sa résistance dynamique à la fatigue et son poids, qui détermine son inertie.

Pour une roue, les propriétés importantes sont le poids, l'inertie, sa résistance et sa rigidité sous effort frontal et latéral.

Récemment, on a recherché à alléger les roues en réduisant la masse de matière de la jante afin de diminuer également son inertie et l'inertie de la roue.

Dans ce domaine, une première contrainte est l'épaisseur minimale de paroi qui est imposée par l'opération de filage ou d'extrusion du profilé de la jante. Raisonnablement, il n'est pas possible, en effet, de descendre cette épaisseur en dessous de 0.8 millimètre.

Or, certains profils de jante, avec certains types d'alliage peuvent supporter des épaisseurs de paroi plus fine que l'épaisseur minimale imposée par le filage. On a donc entrepris de réduire après filage l'épaisseur de paroi de la jante par exemple par un usinage chimique ainsi que cela est décrit dans la demande de brevet EP 715 001 ou encore EP 714 792.

Pour l'accrochage des rayons, ces deux documents recommandent l'utilisation d'oeillets doubles. Ces jantes appartiennent donc à la première des catégories évoquées plus haut. Les oeillets doubles donnent de bons résultats, toutefois leur mise en place correcte est difficile à maîtriser du fait de la tolérance de fabrication du profilé de la jante, qui influence la distance entre les deux ponts, et de la tolérance de fabrication de l'oeillet lui-même. Le gonflage peut également influencer le serrage que l'oeillet exerce entre les deux ponts ou la répartition des efforts entre ces deux ponts. Un oeillet double mal posé, c'est à dire trop serré, peut donner de moins bons résultats qu'un oeillet simple.

La réduction d'épaisseur de paroi touche essentiellement le pont inférieur de la jante car il est peu sujet aux contraintes provenant de la pression dans le pneumatique ainsi qu'aux contraintes dues aux chocs de la roue. Il est de ce fait logique de rechercher un accrochage des rayons au pont supérieur de la jante pour pouvoir soulager d'autant le pont inférieur des contraintes générées par la tension des rayons.

Les choses vont autrement pour la seconde catégorie de jante à laquelle l'invention se rapporte. En effet, dans ce cas, la tension des rayons est supportée principalement par la partie inférieure du caisson. On ne peut pas réduire de façon uniforme l'épaisseur du pont inférieur ainsi que le prévoit par exemple le EP 715 001 sans affecter la résistance à la fatigue de ce pont. Ce document prévoit bien l'utilisation de masques posés au voisinage des perçages, de façon à renforcer localement l'épaisseur dans ces zones après attaque chimique. Une telle technique se révèle cependant lourde à mettre en oeuvre. En outre, la réduction d'épaisseur obtenue est brutale, ce qui ne résout pas le problème de résistance à la fatigue de façon satisfaisante.

Un but de l'invention est de proposer une jante avec un accrochage de rayons dans la partie inférieure du caisson qui présente des propriétés améliorées, c'est-à-dire dont le poids est réduit par un usinage de paroi, et dont la résistance à la fatigue n'est pas affectée de façon significative par la diminution de poids.

Un autre but de l'invention est de proposer une jante ayant une esthétique améliorée, c'est à dire dont les surfaces usinées réalisées en vue de la réduction de poids forment un support permettant de produire un effet esthétique remarquable.

Un autre but de l'invention est de proposer une roue de bicyclette dont les rayons sont accrochés à la partie inférieure du caisson et qui présente des propriétés améliorées de poids et d'inertie.

D'autres buts et avantages de l'invention apparaîtront au cours de la description qui va suivre.

La jante de bicyclette selon l'invention présente un profilé annulaire dont la section comprend un caisson délimité par un pont supérieur et une partie inférieure comprenant un pont inférieur et des parois latérales, le pont inférieur ou les parois latérales ayant des perçages répartis de façon régulière et prévus pour l'accrochage des rayons, les perçages et leur voisinage immédiat définissant des zones de perçages.

La jante est caractérisée par le fait que l'épaisseur d'au moins l'une des parois que sont le pont inférieur et les parois latérales a une valeur nominale dans les zones de perçages et une valeur inférieure à la valeur nominale dans les zones intermédiaires situées entre deux zones de perçage adjacentes, que l'épaisseur de la paroi est diminuée dans les zones intermédiaires (29) par une opération d'usinage mécanique et que l'épaisseur de la dite paroi varie progressivement depuis la valeur nominale jusqu'à la valeur inférieure à la valeur nominale.

L'invention repose sur la constatation suivante. Pour un accrochage des rayons au pont inférieur de la jante, les contraintes dans le pont inférieur sont élevées dans les zones de perçage, mais décroissent rapidement dès qu'on s'éloigne de ces zones. Ainsi, l'épaisseur de paroi peut être diminuée entre les différentes zones de perçage sans affecter la résistance à la fatigue de la jante de façon significative. La progressivité de la variation d'épaisseur assure d'autre part une répartition et une diffusion homogènes de ces contraintes.

L'invention sera mieux comprise en se référant à la description ci-dessus et aux dessins en annexe qui en font partie intégrante.
La figure est une vue en section d'un profilé de jante selon un mode non limitatif de mise en oeuvre de l'invention.
La figure 2 est une vue en coupe longitudinale de la jante de la figure 1 au niveau d'un perçage de rayon.
La figure 3 représente la jante de la figure 2 vue de l'intérieur.
La figure 4 montre la jante de la figure 2 vue de côté.

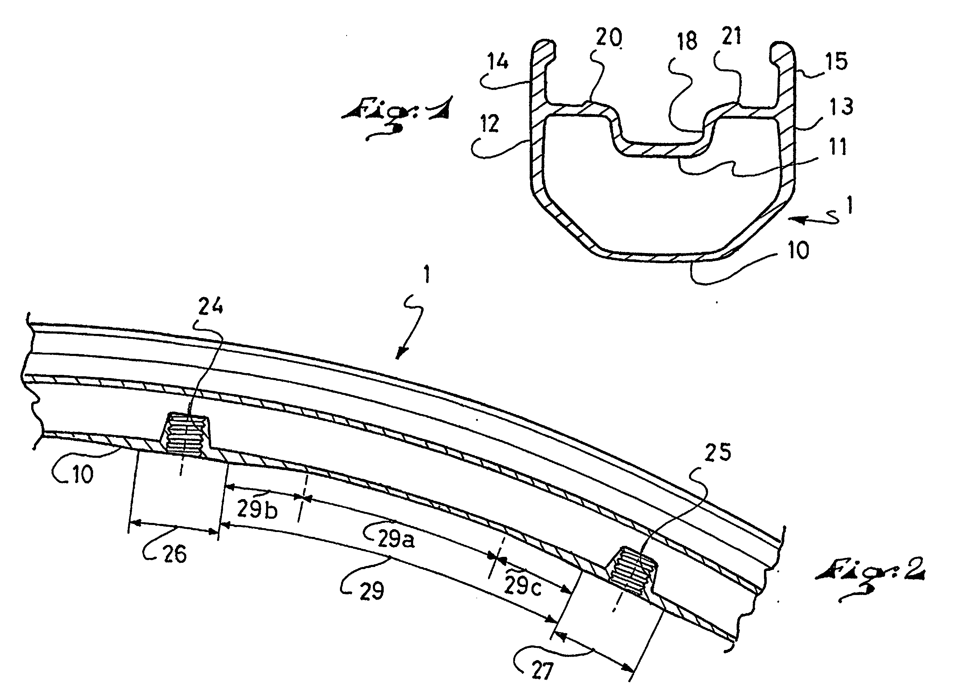

La figure 1 représente en section le profilé d'une jante 1 selon un premier mode de mise en oeuvre de l'invention. La jante représentée est prévue pour équipée un vélo tout terrain. De façon connue, la jante est réalisée à partir d'un segment de profilé en alliage d'aluminium ou autre cintré dont les deux extrémités sont assemblées, par soudure ou encore à l'aide d'un manchon. De façon classique, le profilé comprend une structure en caisson, avec un pont supérieur 11 et une partie inférieure comprenant le pont inférieur 10 et des parois latérales 12 et 13, qui se prolongent vers le haut par des ailes 14 et 15. Les ailes forment avec le pont supérieur 11 un canal annulaire dans lequel est logé le pneumatique. Le diamètre externe de la jante est de 572 millimètres.

Selon une particularité de ce mode de réalisation, le pont supérieur ne présente aucun perçage en dehors de celui prévu pour la valve. La jante est prévue pour un montage sans chambre à air. Pour faciliter le montage du pneu et son gonflage, de préférence, ainsi que cela est visible dans la figure 1, le pont supérieur présente une gorge étroite et profonde 18. La gorge est en outre bordée par deux rebords en saillie 20 et 21. Au montage du pneu, les flancs du pneu sont logés dans la gorge et tendent à se détendre vers les parois de la gorge réalisant à ce niveau une étanchéité relative. Ceci permet le gonflage primaire du pneu, qui , par ailleurs améliore l'étanchéité entre le pneu et la jante au fur et à mesure que la pression dans le pneu augmente. Au delà d'une pression déterminée dans le pneu, les flancs franchissent les rebords en saillie 20 et 21 et se plaquent contre les ailes 14 et 15. Ceci a déjà été décrit dans la demande de brevet publiée sous le numéro EP 893 280 déposé par la demanderesse.

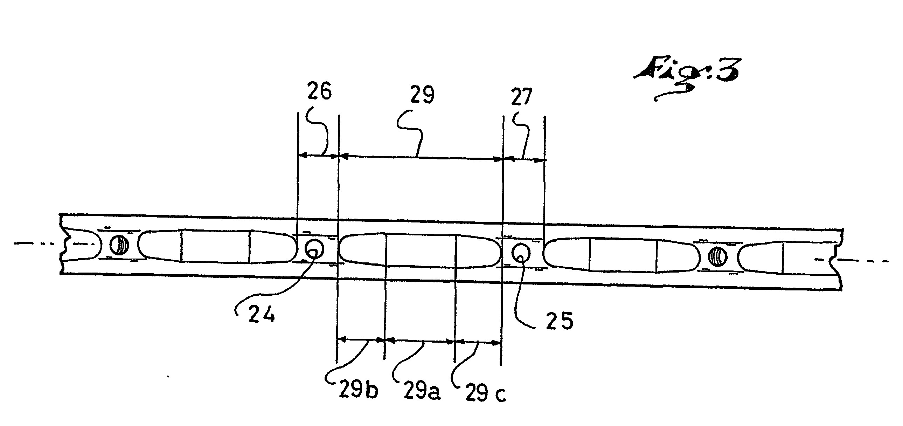

Un autre particularité de la jante représentée dans les figures 1 à 3 est également décrite dans la demande de brevet précitée. Le pont inférieur présente des perçages pour l'accrochage des rayons tels que les perçages 24 et 25. Ces perçages sont répartis de façon régulière le long du périmètre de la jante. Ils ont la forme d'une cheminée qui a été formée par un refoulement de matière vers l'intérieur du caisson. L'intérieur de la cheminée est taraudé pour permettre le vissage d'un embout d'accrochage de rayon. Le nombre de perçages prévus pour l'accrochage des rayons n'est pas limitatif. De façon usuelle, il peut être compris entre 12 et 36 selon le type de roue.

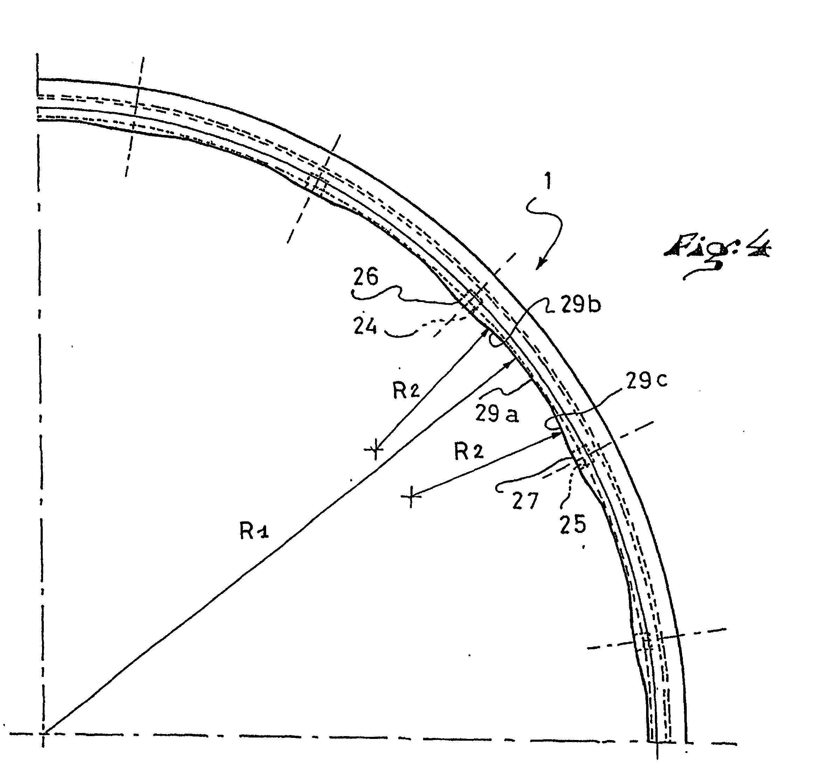

Selon le mode de réalisation illustré, l'épaisseur du pont inférieur 10 est variable le long du périmètre de ce pont. Dans le voisinage des perçages, l'épaisseur du pont inférieur est égale à l'épaisseur nominale de cette paroi, c'est à dire à l'épaisseur de la paroi issue de la filière. Ces zones sont repérées en 26 et 27 pour les perçages 24 et 25. Comme on peut le voir plus facilement à la figure 3, ces zones de perçage s'étendent tout autour des perçages, et elles s'étendent en direction d'un perçage adjacent le long du périmètre de la jante.

Dans le mode de réalisation illustré, les perçages ont un diamètre intérieur de 6 millimètres, et les zones de perçage 26 et 27 s'étendent sur 8 millimètres de chaque côté de l'axe du perçage, le long du périmètre de la jante.

Entre deux zones d'épaisseur nominale, le pont inférieur présente des zones d'épaisseur réduite. Ainsi, les figures représentent la zone 29 d'épaisseur réduite située entre les deux zones de perçage 26 et 27. La réduction d'épaisseur est progressive, c'est à dire que la zone 29 présente une partie médiane 29a d'épaisseur minimale qui est bordée de deux zones de transition 29b et 29c avec les zones adjacentes d'épaisseur nominale.

Dans le mode de réalisation illustré, l'épaisseur nominale du pont inférieur est de 1,7 millimètre. Dans les zones 29a l'épaisseur est abaissée à 0,5 millimètres. La zone 29 présente une zone médiane 29a usinée avec un rayon R1 de 266,2 millimètres centré sur l'axe de révolution de la jante. Les deux zones de transition qui bordent la zone médiane sont quant à elles usinées avec un rayon R2 de 100 millimètres et elles viennent en tangence avec la zone médiane.

Ces valeurs sont données à titre indicatif et ne sont pas limitatives pour l'invention. En particulier, la valeur de l'épaisseur minimale pourrait être différente de 0,5 millimètre.

L'usinage est un usinage mécanique réalisé sur une fraiseuse à commande numérique ou sur une machine spéciale. La fraise utilisée peut être une fraise en forme qui donne au pont inférieur une forme légèrement bombée en section, c'est à dire dans le plan de la figure 1. L'usinage est répété dans chaque intervalle situé entre deux perçages. Dans l'intervalle comprenant le trou de valve, il est possible de réduire l'épaisseur du pont à une valeur intermédiaire comprise entre la valeur nominale la valeur minimale, par exemple 1, 1 millimètre, de façon à ne pas risquer d'endommager le pont ou la valve dans cette zone au montage de la roue.

Ainsi que cela a été dit précédemment, les contraintes résultant de la tension des rayons sont concentrées dans des zones du pont inférieur situées au voisinage des perçages d'accrochage. Dans ces zones, l'épaisseur du pont est égale voire supérieure à l'épaisseur de paroi pour une jante traditionnelle. Le fait d'avoir des perçages en forme de cheminée procure un avantage additionnel. En effet, ce mode de perçage préserve la continuité de structure du pont inférieur, ce qui fait qu'on ne crée pas de zone de faiblesse à la périphérie du perçage. Il en est de même pour le pont supérieur qui ne présente aucun perçage en dehors du trou de valve.

Dans les intervalles entre deux perçages successifs, la concentration des contraintes dans le pont inférieur est faible, il est donc possible de réduire l'épaisseur de paroi ainsi que cela a été décrit. Les zones de transition assurent une répartition homogène des contraintes entre les zones d'épaisseur nominale et les zones d'épaisseur réduite.

Le poids de la jante est diminué, son inertie également, sans que sa résistance statique et sa résistance dynamique à la fatigue ne soient affectées de façon significative.

Concernant la finition de la jante, usuellement, la jante subit une opération d'anodisation qui protège sa couche externe, et qui permet le cas échéant de la durcir et/ou de la colorer. Dans le cas présent, si l'usinage des intervalles est réalisé après une première opération d'anodisation, les zones usinées sont susceptibles de recevoir une seconde anodisation, par contre, les zones non usinées ne sont pas sensibles à ce nouveau traitement. En utilisant des produits appropriés, il est donc possible d'anodiser les zones usinées avec une coloration différente de celle des zones non usinées. Ceci permet d'obtenir un effet esthétique tout à fait remarquable. Les surfaces de freinage si elles sont usinées également peuvent être associées à cet effet de double coloration. On pourrait aussi obtenir un effet de coloration multiple en réalisant des séquences répétées d'usinage et d'anodisation avec des composants colorants différents.

Il va de soi que l'invention n'est pas limitée au mode de réalisation qui vient d'être décrit.

En premier lieu, partant de la même idée que les contraintes sont concentrées dans le voisinage des perçages, il serait possible de diminuer de la même façon l'épaisseur des parois latérales dans les intervalles situés entre deux perçages successifs. Ceci pourrait s'appliquer notamment aux jantes ayant un profilé très effilé en section, avec un pont inférieur très étroit, voire inexistant. Une telle jante est par exemple décrite dans la demande de brevet publiée sous le numéro EP 794 791 au nom de la demanderesse.

L'invention s'applique de façon générale à tout profil de jantes y compris celles équipées de cloisons de renfort à l'intérieur du caisson.

En outre, l'invention n'est pas limitée aux jantes dont les perçages sont en forme de cheminée. Elle s'applique à tout type de jante, en particulier les jantes prévues pour des vélos de route, des vélos tout terrain, aux jantes où l'accrochage des rayons est réalisée au moyen d'oeillets simples ou doubles traditionnels.

## Revendications

1. Jante de bicyclette formée selon un profilé annulaire dont la section comprend un caisson délimité par un pont supérieur (11) et une partie inférieure comprenant un pont inférieur (10) et des parois latérales 12, 13), le pont inférieur ou les parois latérales ayant des perçages (24, 25) répartis de façon régulière et prévus pour l'accrochage des rayons, les perçages et leur voisinage immédiat définissant des zones de perçages (26, 27), **caractérisée par le fait que** l'épaisseur d'au moins l'une des parois que sont le pont inférieur (10) et les parois latérales (12, 13) a une valeur nominale dans les zones de perçages (26, 27) et une valeur inférieure à la valeur nominale dans les zones intermédiaires (29) situées entre deux zones de perçage adjacentes, que l'épaisseur de la paroi est diminuée dans les zones intermédiaires (29) par une opération d'usinage mécanique, et que l'épaisseur de la dite paroi varie progressivement depuis la valeur nominale jusqu'à la valeur inférieure à la valeur nominale.

2. Jante selon la revendication 1, **caractérisée par le fait qu'**un zone intermédiaire (29) comprend une zone médiane (29a) d'épaisseur minimale et des zones de transition (29b, 29c).

3. Jante selon la revendication 1, **caractérisée par le fait que** le pont inférieur (10) présente des zones intermédiaires (29) situées entre deux zones de perçage adjacentes dont l'épaisseur est diminuée par rapport aux zones de perçage (26, 27).

4. Jante selon la revendication 3, **caractérisée par le fait que** l'épaisseur minimale d'une zone médiane (29a) est de 0,5 millimètre.

5. Jante selon la revendication 3, **caractérisée par le fait que** les zones de transition sont usinées avec un rayon de courbure de 100 millimètres, et qu'elles viennent chacune en tangence avec un zone médiane et une zone de perçage.

6. Jante selon la revendication 1, **caractérisée par le fait que** les zones intermédiaires ont subi un traitement de coloration différent du reste de la jante.

7. Jante selon la revendication 1, **caractérisée par le fait que** le pont supérieur ne présente aucun perçage à l'exception de celui prévu pour la valve.

8. Jante selon la revendication 1, **caractérisée par le fait que** les perçages (24, 25) sont réalisées selon une cheminée orientée vers l'intérieur du caisson.

9. Roue de bicyclette **caractérisée par le fait qu'**elle présente une jante selon l'une quelconque des revendications précédentes.

## Patentansprüche

1. Fahrradfelge, welche gemäß einem ringförmigen Profil gebildet ist, dessen Querschnitt einen Kasten aufweist, der abgegrenzt ist durch eine obere Brücke (11) und einen unteren Teil, welcher eine untere Brücke (10) und seitliche Wände (12, 13) aufweist, wobei die untere Brücke oder die seitlichen Wände Bohrungen (24, 25) aufweisen, welche in regelmäßiger Weise verteilt sind und für das Einhaken von Speichern vorgesehen sind, wobei die Bohrungen und ihre unmittelbare Umgebung Bohrungszonen (26, 27) definieren, **dadurch gekennzeichnet, dass** die Dicke von mindestens einer der Wände, welche die untere Brücke (10) und die seitlichen Wände (12, 13) sind, einen nominalen Wert in den Bohrungszonen (26, 27) aufweisen und einen Wert geringer als der nominale Wert in den Zwischenzonen (29), welche zwischen zwei benachbarten Bohrungszonen angeordnet sind, dass die Dicke der Wand in den Zwischenzonen (29) durch einen mechanischen Formgebungsarbeitsgang verringert ist, und dass die Dicke der Wand progressiv variiert ausgehend von dem nominalen Wert bis zu dem zum nominalen Wert geringeren Wert.

2. Felge nach Anspruch 1, **dadurch gekennzeichnet, dass** die Zwischenzonen (29) eine Mittelzone (29a) einer minimalen Dicke aufweist und Übergangszonen (29b, 29c).

3. Felge nach Anspruch 1, **dadurch gekennzeichnet, dass** die untere Brücke (10) Zwischenzonen (29) aufweist, welche zwischen zwei benachbarten Bohrungszonen angeordnet sind, deren Dicke verringert ist in Bezug auf die Bohrungszone (26, 27).

4. Felge nach Anspruch 3, **dadurch gekennzeichnet, dass** die minimale Dicke einer Mittelzone (29a) 0,5 mm ist.

5. Felge nach Anspruch 3, **dadurch gekennzeichnet, dass** die Übergangszonen geformt sind mit einem Krümmungsradius von 100 mm, und dass sie jede in Tangente mit einer Mittelzone und einer Bohrungszone kommen.

6. Felge nach Anspruch 1, **dadurch gekennzeichnet, dass** die Zwischenzonen einer Kolorierungsbehandlung ausgesetzt sind, unterschiedlich zu dem Rest der Felge.

7. Felge nach Anspruch 1, **dadurch gekennzeichnet, dass** die obere Brücke keine Bohrung mit Ausnahme von derjenigen aufweist, welche für das Ventil vorgesehen ist.

8. Felge nach Anspruch 1, **dadurch gekennzeichnet, dass** die Bohrungen (24, 25) gemäß einem Kamin realisiert sind, der in Richtung nach dem Inneren des Kastens orientiert ist.

9. Fahrradrad, **dadurch gekennzeichnet, dass** es eine Felge gemäß irgendeinem der vorherigen Ansprüche aufweist.

## Claims

1. Bicycle rim formed from an annular profile having a cross section including a case delimited by an upper bridge (11) and a lower part including a lower bridge (10) and lateral walls (12, 13), whereby the lower bridge or the lateral walls have bores (24, 25) which are distributed in a regular way and provided for the anchoring of spokes, the bores and their immediate surroundings defining boring zones (26, 27), **characterized in that** the thickness of at least one of the walls forming the upper bridge (10) or the lateral walls (12, 13) has a nominal value in the boring zones (26, 27) and a lower value with regard to the nominal value in the intermediate zones (29), provided between two adjacent boring zones, that the thickness of the wall is reduced in the intermediate zones (29) by way of a mechanical forming operation, and that the thickness of the wall varies progressively from the nominal value to the value being lower with regard to the nominal value.

2. Rim according to claim 1, **characterized in that** the intermediate zones (29) comprise a middle zone (29a) having a minimal thickness and transition zones (29b, 29c).

3. Rim according to claim 1, **characterized in that** the lower bridge (10) has intermediate zones (29) provided between two adjacent boring zones, the thickness of which is reduced with regard to the boring zones (26, 27).

4. Rim according to claim 3, **characterized in that** the minimal thickness of a middle zone (29a) is 0,5 mm.

5. Rim according to claim 3, **characterized in that** the transition zones are formed with a radius of curvature of 100 mm and that they come into tangent with a middle zone and a boring zone.

6. Rim according to claim 1, **characterized in that** the intermediate zones are subjected to a treatment of coloration different from the rest of the rim.

7. Rim according to claim 1, **characterized in that** the upper bridge has no boring except of the boring provided for the valve.

8. Rim according to claim 1, **characterized in that** the bores (24, 25) are realized in accordance with a chimney orientated in the direction of the interior of the case.

9. Wheel of a bicycle **characterized in that** it has a rim according to one of the preceding claims.
